# EUROPÄISCHE PATENTANMELDUNG

(11) **EP 1 688 839 A1**
(43) Veröffentlichungstag der Anmeldung: **09.08.2006**
(21) Anmeldenummer: 06001752.2
(22) Anmeldetag: 27.01.2006
(51) Int. Cl.: G06F 9/445, H04L 29/06, H04L 29/08

(54) **Datencontainer und zugehöriges Verfahren zur Übertragung von sicherheitsrelevanten Nutzdaten an Geräte bzw. Systeme**

(30) Priorität: 02.02.2005 DE 102005004797; 04.04.2005 DE 102005015402
(71) Anmelder: Rohde & Schwarz SIT GmbH, 12489 Berlin (DE)
(72) Erfinder: Chybiak, Jan, 13088 Berlin (DE)
(74) Vertreter: Körfer, Thomas

(57) **Zusammenfassung**

Ein Datencontainer und ein Verfahren zur Anwendung eines Datencontainer dient zur Übertragung von Nutzdaten (i) an mindestens ein Gerät oder System (j) und besteht aus einem Kennzeichnungsdatenbereich (1,1') und einem Nutzdatenbereich (2,2'). Die im Nutzdatenbereich (2,2') enthaltenen Nutzdaten (i) sind jeweils entweder mindestens einem Gerät bzw. System (j) eindeutig zuordenbar oder können jedem beliebigen Gerät bzw. System (j) zugeordnet werden.

## Beschreibung

Die Erfindung betrifft einen Datencontainer und ein zugehöriges Verfahren zur Übertragung von sicherheitsrelevanten Nutzdaten an Geräte bzw. Systeme sowie ein entsprechendes Telekommunikationssystem.

Viele Funktionalitäten in elektronischen Geräten und Systemen in unterschiedlichsten Anwendungsfeldern - beispielsweise Steuergeräte in der KFZ-Elektronik, Mobilfunkgeräte, Personalcomputer, TV-/HiFi-Geräte - werden softwaretechnisch realisiert. Die Integration sowie die Aktualisierung (Update) der Software in die entsprechende Geräte-Hardware erfolgt in vielen Fällen nicht mehr beim Hersteller, sondern beim Zulieferer bzw. beim Endanwender. Wesentliche Anforderungen an die Software-Integration sind einerseits ein hoher Komfort in der Handhabung und andererseits ein zuverlässiger Softwareschutz.

Die wesentlichen Aspekte des Softwareschutzes sind dabei die Authentizität der Software - die korrekte Herkunft der Software -, der Schutz vor Manipulation der Software, die Vertraulichkeit der Software und schließlich die korrekte Zugriffsberechtigung auf die Software.

Für die Übertragung von Nutzdaten zwischen verschiedenen Geräten und Systemen über ein elektronisches Medium - beispielsweise ein privates oder öffentliches Netz - oder über einen Datenträger - beispielsweise eine Diskette oder eine optische Speicherscheibe - hat sich ein Übertragungsstandard etabliert, bei dem die Nutzdaten in einzelnen Datenpaketen in einem Nutzdatenbereich ergänzt um Status- bzw. Steuerdaten in einem Steuerdatenbereich in einem Datencontainer zusammengefaßt werden. Eine beispielhafte Datenstruktur eines derartigen Datencontainers ist in der DE 199 07 019 A1 offenbart.

Die Berücksichtigung einzelner Aspekte eines Softwareschutzes in einem Datencontainer ist beim Stand der Technik bereits realisiert:
Die Authentizität einer Software kann durch Verifizierung einer Signatur des zu übertragenden Datencontainers entsprechend der Druckschrift DE 103 08 011 A1 überprüft werden. Der richtige Zugriff eines Gerätes bzw. Systems auf die Inhalte eines Datencontainers erfolgt gemäß Druckschrift DE 199 07 019 A1 über Identifikatoren, die die Verbindung zwischen dem absendenden Gerät bzw. System und dem empfangenden Gerät bzw. System eindeutig kennzeichnen. Der Schutz vor Manipulation der Software und die Vertraulichkeit der Software kann über unterschiedliche Verschlüsselungsverfahren, die aus dem Stand der Technik bekannt sind, gewährleistet werden.

Während somit aus dem Stand der Technik eine Lösung bekannt ist, bei der die Zuordnung eines bestimmten Datencontainers zu einem Gerät bzw. System und damit umgekehrt die Zugriffsberechtigung eines Gerätes bzw. eines Systems auf einem bestimmten Datencontainer eindeutig festgelegt, kann dem Stand der Technik keine Lösung eines Datencontainers entnommen werden, bei der die Zuordnung des Datencontainers zu mindestens einem von mehreren Geräten bzw. Systemen unbekannt ist.

Ein Datencontainer, dessen Zuordnung zu einem oder mehreren Geräten bzw. Systemen nicht offengelegt ist, ist insbesondere in Anwendungsfällen nützlich, in denen niemandem bekannt ist bzw. niemandem bekannt werden soll, welche Daten eines Datencontainers welchem Gerät bzw. System zugeführt werden soll. Beispiele dafür sind:
- das Einbringen eines Startwertes für einen im Gerät bzw. System integrierten Zufallsgenerator, der sowohl dem Hersteller, dem Zulieferer und dem Endanwender des Geräts bzw. Systems und/oder einem Dritten nicht bekannt werden soll,
- das Einbringen eines Schlüssels zum Booten, Freischalten und/oder Deaktivieren einer Software, der dem Zulieferer und dem Anwender des Geräts bzw. Systems und/oder einem Dritten nicht bekannt werden soll,
- das Einbringen von verschlüsselten Informationen zur Diagnose des Gerät bzw. Systems, ohne dem Zulieferer und Anwender des Geräts bzw. Systems und/oder einem Dritten die Tatsache der Diagnose und die näheren Inhalte der Diagnose zu publizieren usw.

Der Erfindung liegt deshalb die Aufgabe zugrunde, einen Datencontainer und ein entsprechendes Verfahren dahingehend weiterzuentwickeln, daß es weder dem Hersteller - Absender des Datencontainers - noch dem Zulieferer oder dem Endanwender des Gerät bzw. des Systems noch einem Dritten bekannt ist oder bekannt wird, welche Daten des Datencontainers bzw. welcher Datencontainer in welches Gerät bzw. System übertragen werden.

Die Aufgabe der Erfindung wird durch einen Datencontainer mit den Merkmalen des Anspruchs 1 und durch ein Verfahren zur Anwendung des Datencontainers mit den Merkmalen des Anspruchs 9 gelöst. Vorteilhafte Weiterbildungen und Anwendungen der Erfindung sind in den abhängigen Ansprüchen aufgeführt.

In einer ersten Ausführungsform des erfindungsgemäßen Datencontainers sind in einem Nutzdatenbereich mehrere Nutzdaten für eine Zuordnung zu jeweils mindestens einem Gerät bzw. System vorgesehen. Neben dem Nutzdatenbereich weist der Datencontainer eine Kennzeichnungsdatenbereich auf, in dem für jedes Nutzdatum des Nutzdatenbereichs ein Zuordnungsstatus vorgesehen ist, aus dem hervorgeht, daß das jeweilige Nutzdatum entweder mindestens einem oder keinen der für den Datencontainer zugelassenen Geräte bzw. Systeme zuordenbar ist.

Im Falle einer Zuordnung des Datencontainers zu mindestens einem der für den Datencontainer zugelassenen Geräte bzw. Systeme wird über ein für jedes im Nutzdatenbereich enthaltene Nutzdatum jeweils ein Zuordnungsdatum vorgesehen, über das die eindeutige Zuordnung des Datencontainers zu einem oder mehreren der für den Datencontainer zugelassenen Geräte bzw. Systeme realisiert wird.

Im Falle keiner Zuordnung eines Nutzdatums des Datencontainers zu einem der für den Datencontainer zugelassenen Geräte bzw. Systeme wird der Datencontainer erfindungsgemäß jedem beliebigen für den Datencontainer zugelassenen Geräte bzw. System zugeordnet. Hierbei kann über ein weiteres Kennzeichen im Kennzeichnungsdatenbereich des Datencontainers festgelegt werden, für wie viele der für den Datencontainer zugelassenen Geräte bzw. Systeme das jeweils nicht zuordenbare Nutzdatum jeweils zugeordnet werden kann.

Auf diese Weise ist es möglich, jeweils ein Nutzdatum im Nutzdatenbereich eines Datencontainers ohne Kenntnis der Zuordnung für den Hersteller, Zulieferer oder Endanwender des Gerät bzw. Systems oder für einen Dritten einem beliebigen Gerät bzw. System zuzuordnen. Wird das einem beliebigen Gerät bzw. System zugeordnete Nutzdatum zusätzlich durch Verschlüsselung geheim gehalten, so ist das einem beliebigen Gerät bzw. System auf diese Weise zugeordnete Nutzdatum niemandem bekannt.

Es ist also für den Hersteller eines Gerätes bzw. Systems, der gleichzeitig der Absender des Datencontainers ist, nicht möglich, festzustellen, in welches Gerät bzw. System das jeweilige Nutzdatum des Datencontainers eingelesen und damit zugeordnet wurde. Für den Zulieferer und Endanwender des Gerät bzw. Systems, die jeweils die Empfänger des Datencontainers sind, wie auch für einen Dritten ist es unter der Annahme eines verschlüsselten Datencontainers und einer Abspeicherung des jeweiligen Nutzdatums in einem lese- und zusätzlich schreibgeschützten Speicherbereich des Gerät bzw. Systems nicht möglich, festzustellen, welches Nutzdatum im jeweils vorliegenden Gerät bzw. System eingelesen wurde.

Weist der Datencontainer eine Signatur auf, deren Verifizierung jederzeit vom Hersteller, Zulieferer oder Endanwender des Gerät bzw. Systems oder einen Dritten ohne großen Aufwand durchführbar ist, so kann die Herkunft des Datencontainers offengelegt werden. Auf diese Weise ist gewährleistet, daß im jeweiligen Gerät bzw. System nur Nutzdaten eines bestimmten Herstellers hinterlegt werden.

In einer zweiten Ausführungsform des erfindungsgemäßen Datencontainers ist nur ein Nutzdatum mit einer beliebigen Zuordnung für Geräte bzw. Systeme vorgesehen, die für den Datencontainer zugelassen sind. Folglich sind mehrere Datencontainer für die Zuordnung mehrerer Nutzdaten zu mindestens einem Gerät bzw. System erforderlich, um eine gewisse Stochastik in der beliebigen Zuordnung mehrerer Datencontainer und damit mehrerer Nutzdaten zu mindestens einem Gerät bzw. System zu verwirklichen.

Erfindungsgemäß können im Nutzdatenbereich des Datencontainers neben Parametern wie beispielsweise der Versionsstand eines Geräts bzw. Systems oder das Startdatum für einen im Gerät bzw. System integrierten Zufallsgenerator auch Schlüssel übertragen werden. Werden im Datencontainer vom Hersteller eines Gerät bzw. Systems verschlüsselte Schlüssel zum Zulieferer des Gerät bzw. Systems übertragen, so können in einem Initialisierungsvorgang des Gerät bzw. Systems beim Zulieferer die in einem vorherigen Schritt vom Zulieferer integrierten Initial-Schlüssel durch die verschlüsselten Schlüssel ersetzt werden. Somit erhält der Hersteller des Gerät bzw. Systems durch diesen Austausch des Schlüssels auf Grund der Unkenntnis des Zulieferers über den Inhalt des Schlüssels die Hoheit über das Gerät bzw. System. Ist der verschlüsselte Schlüssel im Datencontainer zusätzlich keinem Gerät bzw. System direkt zuordenbar, so besitzt niemand die Hoheit über das jeweilige Gerät bzw. System. Diese Variante ist vor allem bei Hochsicherheitsanwendungen interessant, bei denen nicht einmal das Personal des Herstellers die Kenntnis über das mit dem verschlüsselten Schlüssel versehene Geräte bzw. System besitzt und damit über die Hoheit über das jeweilige Gerät bzw. System verfügen würde.

Die beiden Ausführungsformen des erfindungsgemäßen Datencontainers werden im folgenden unter Berücksichtigung der Zeichnung näher erläutert. In der Zeichnung zeigen:
- Fig. 1: eine Datenstruktur einer ersten Ausführungsform des erfindungsgemäßen Datencontainers,
- Fig. 2: eine Datenstruktur einer zweiten Ausführungsform des erfindungsgemäßen Datencontainers und
- Fig. 3: ein Flußdiagramm eines Verfahren zur Anwendung des erfindungsgemäßen Datencontainers.

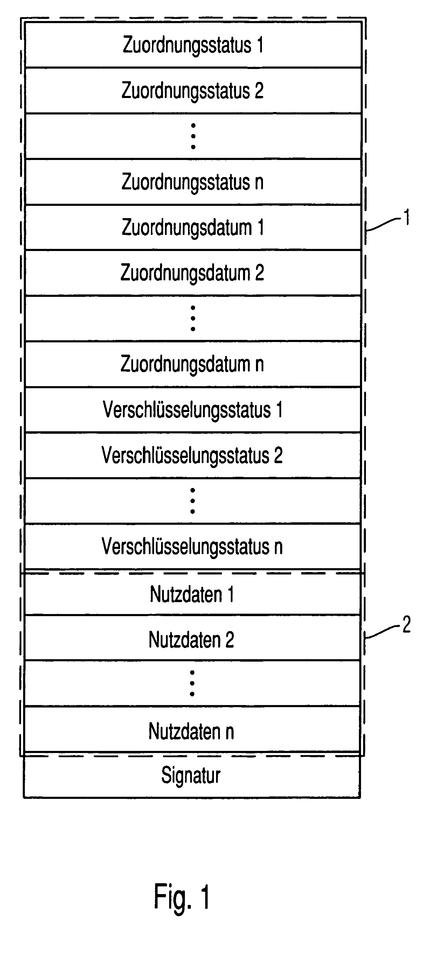

In Fig. 1 wird im folgenden die Datenstruktur einer ersten Ausführungsform des erfindungsgemäßen Datencontainers mit den erfindungswesentlichen Datenelementen beschrieben. Die Datencontainer sind zur Übertragung mittels eines Telekommunikationssystems, z.B. mittels eines Mobilfunksystems oder mittel einer Telefonverbindung, oder eines Datenträgers - z.B. mittels einer Diskette - vorgesehen.

Die Datenstruktur der ersten Ausführungsform des erfindungsgemäßen Datencontainers besteht aus einem Kennzeichnungsdatenbereich 1 und einem Nutzdatenbereich 2. Im Kennzeichnungsdatenbereich 1 sind die folgenden die jeweiligen Nutzdaten 1,2,...,n kennzeichnenden Daten enthalten:
- Mit dem Zuordnungsstatus i erfolgt eine Kennzeichnung, ob die jeweiligen Nutzdaten i einem bzw. mehreren bestimmten Geräten bzw. Systemen j zuordenbar sind oder keinem bestimmten Gerät bzw. System j zuordenbar sind.
- Mit dem Zuordnungsdatum i wird die Zuordnungsadresse zu einem bestimmten Gerät bzw. System j im Falle einer Zuordnung der Nutzdaten i zu mindestens einem bestimmten Gerät bzw. System j vorgegeben. Im Falle einer Zuordnung zu mehreren Geräten bzw. Systemen j weisen diese Geräte bzw. Systeme j alle die gleiche Zuordnungsadresse auf. Auch der Fall, daß die den Nutzdaten i zuzuordnenden Geräte bzw. Systeme j keine identische Zuordnungsadressen aufweisen, ist von der Erfindung abgedeckt, indem die den Geräten bzw. Systemen j jeweils zugehörigen Zuordnungsadressen in Kennzeichnungsdatenbereich 1 des erfindungsgemäßen Datencontainers im Gegensatz zur Darstellung in Fig. 1 aufgeführt sind.
- Mit dem Verschlüsselungsstatus i ist beschrieben, ob die Nutzdaten i in verschlüsselter oder unverschlüsselter Form vorliegen und im Fall einer Verschlüsselung, welches Verschlüsselungsverfahren zur Anwendung kommt, insbesondere ob eine symmetrische oder as symmetrische Verschlüsselung verwendet wird.
- Die Herkunft des Datencontainers - Absender des Datencontainers - und damit die Herkunft aller Nutzdaten i wird durch die Signatur charakterisiert.

Im Nutzdatenbereich schließlich sind in der gleichen Reihenfolge die einzelnen Nutzdaten i abgespeichert. Hierbei kann es sich um ein einzelnes Nutzdatum mit einer bestimmten Datenlänge oder um mehrere in einem oder mehreren Datenpaketen abgespeicherte Nutzdaten handeln, die jeweils einem oder mehreren Geräten bzw. Systemen j zugeführt werden.

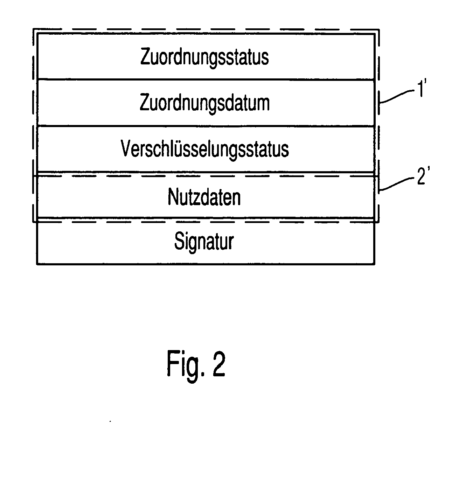

In Fig. 2 ist eine zweite Ausführungsform der Datenstruktur eines erfindungsgemäßen Datencontainers dargestellt, die aus der ersten Ausführungsform der Datenstruktur eines erfindungsgemäßen Datencontainers in Fig. 1 hervorgeht. Der Nutzdatenbereich 2' der zweiten Ausführungsforrm beinhaltet im Gegensatz zum Nutzdatenbereich 2 der ersten Ausführungsform nur ein für ein einziges Gerät bzw. System j bestimmtes Nutzdatum oder in mehreren Datenpaketen zusammengefaßte, für ein einziges Gerät bzw. System j bestimmte Nutzdaten. Der Kennzeichnungsdatenbereich 1' der zweiten Ausführungsform weist die gleichen kennzeichnenden Daten wie der Kennzeichnungsdatenbereich 1 der ersten Ausführungsform auf, ist aber in Analogie zum Nutzdatenbereich 1' auf jeweils nur ein einziges für ein einziges Gerät bzw. System j bestimmtes Nutzdatum oder auf für ein einziges Gerät bzw. System j bestimmte Nutzdaten beschränkt.

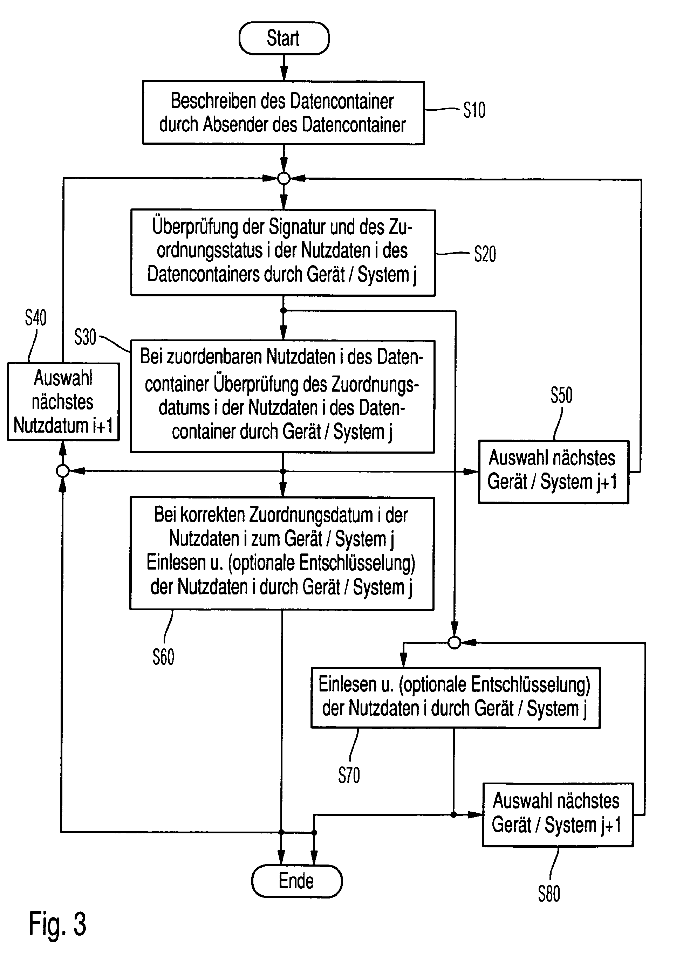

In Fig. 3 wird im folgenden das erfindungsgemäße Verfahren zur Anwendung des erfindungsgemäßen Datencontainers dargestellt:
In Verfahrensschritt S10 wird die Datenstruktur des erfindungsgemäßen Datencontainers hinsichtlich des Kennzeichnungsdatenbereiches 1 bzw. 1' und des Nutzdatenbereiches 2 bzw. 2' vom Absender des Datencontainers mit kennzeichnenden Daten und mit Nutzdaten beschrieben. Der Absender kann hierbei der Hersteller eines Gerätes bzw. Systems sein, der seinem Zulieferer bzw. Endanwender einen Datencontainer mit Nutzdaten bestehend aus Parametern und/oder Schlüsseln zur Integration in das Gerät bzw. System überträgt.

Die Übertragung des Datencontainers kann entweder mit einem Datenträger - beispielsweise Diskette, Compact-Disc, Smartcard - oder über ein privates oder öffentliches Netz mittels beispielsweise Fax, E-Mail oder SMS erfolgen.

Im Rahmen einer DV-unterstützten Auswertung des empfangenen Datencontainers werden in Verfahrensschritt S20 vom Empfänger des erfindungsgemäßen Datencontainers - der Zulieferer oder der Endanwender des Gerät bzw. Systems j - im Falle der ersten Ausführungsform des Datencontainers alle Zuordnungsstati i der Nutzdaten i oder im Fall der zweiten Ausführungsform des Datencontainers der einzig vorhandene Zuordnungsstatus des Nutzdatums bzw. der zusammengehörenden Nutzdaten überprüft.

Wird im Rahmen der DV-unterstützten Auswertung des empfangenen Datencontainers im vorherigen Verfahrensschritt S20 im Kennzeichnungsdatenbereich 1 bzw. 1' ein Zuordnungsstatus identifiziert, der eine bestimmte Zuordnung des im Nutzdatenbereich 2 bzw. 2' enthaltenen Nutzdatums i bzw. der zusammengehörenden Nutzdaten i zu einem oder mehreren bestimmten Geräten bzw. Systemen j kennzeichnet, so erfolgt im nächsten Verfahrensschritt S30 eine Überprüfung des zum jeweiligen Nutzdatum i bzw. zu den jeweils zusammengehörenden Nutzdaten i gehörigen Zuordnungsdatums i.

Entspricht das zum jeweiligen Nutzdatum i bzw. zu den jeweils zusammengehörenden Nutzdaten i gehörige Zuordnungsdatum i nicht dem Zuordnungsdatum des Gerätes bzw. Systems j, so ist das Nutzdatum i bzw. sind die jeweils zusammengehörenden Nutzdaten i nicht für das Gerät bzw. System j vorgesehen.

In Verfahrensschritt S40 wird im Fall der ersten Ausführungsform des erfindungsgemäßen Datencontainers das nächste Nutzdatum i+1 bzw. werden die nächsten jeweils zusammengehörenden Nutzdaten i+1 des empfangenen Datencontainers ausgewählt und die jeweils dazugehörigen kennzeichnenden Daten des Kennzeichnungsdatenbereiches 1 daraufhin analog in den Verfahrensschritten S20 und S30 ausgewertet.

Entspricht das Zuordnungsdatum jedes der Nutzdaten i des empfangenen Datencontainers nicht dem Zuordnungsdatum des jeweiligen Geräts bzw. Systems j, so ist der gesamte Datencontainer für das Gerät bzw. System j nicht vorgesehen und wird in Verfahrensschritt S50 bei einem weiteren Gerät bzw. System j+1 hinsichtlich einer möglichen Zuordnung in den Verfahrensschritten S20 und S30 ausgewertet.

Entspricht das zum jeweiligen Nutzdatum i bzw. zu den jeweils zusammengehörenden Nutzdaten i gehörige Zuordnungsdatum i dagegen dem Zuordnungsdatum des Gerätes bzw. Systems j, so wird das jeweilige Nutzdatum i bzw. werden die jeweils zusammengehörenden Nutzdaten i im Verfahrensschritt S60 in einem schreibgeschützten oder optional lesegeschützten Speicherbereich des Gerätes bzw. Systems j eingelesen. Zusätzlich wird anhand des zum Nutzdatum i bzw. zu den jeweils zusammengehörenden Nutzdaten i gehörigen Verschlüsselungsstatus i ermittelt, ob das Nutzdatum i oder die jeweils zusammengehörenden Nutzdaten i verschlüsselt sind. Im Falle einer Verschlüsselung des Nutzdatums i oder der jeweils zusammengehörenden Nutzdaten i werden diese anhand des im Verschlüsselungsstatus i des Datencontainers hinterlegten Verschlüsselungsverfahrens entschlüsselt.

Sind weitere Nutzdaten i+1 im empfangenen Datencontainer vorhanden, so wird in Verfahrensschritt S40 das nächste Nutzdatum i+1 bzw. die nächsten jeweils zusammengehörenden Nutzdaten i+1 des empfangenen Datencontainers ausgewählt und die jeweils dazugehörigen kennzeichnenden Daten des Kennzeichnungsdatenbereiches 1 bzw. 1' daraufhin analog in den Verfahrensschritten S20 und S30 ausgewertet.

Ist das Nutzdatum i bzw. sind die jeweils zusammengehörenden Nutzdaten i des empfangenen Datencontainers entsprechend dem Zuordnungsstatus i keinem bestimmten Gerät bzw. System j zuordenbar, so kann es erfindungsgemäß jedem beliebigen Gerät bzw. System j zugeordnet werden.

In Verfahrensschritt S70 wird das jeweilige Nutzdatum i bzw. die jeweils zusammengehörenden Nutzdaten i in einen lese- und schreibgeschützten Speicherbereich des Gerät bzw. Systems j eingelesen. Zusätzlich wird anhand des zum Nutzdatum i bzw. zu den jeweils zusammengehörenden Nutzdaten i gehörigen Verschlüsselungsstatus i ermittelt, ob das Nutzdatum i oder die jeweils zusammengehörenden Nutzdaten i verschlüsselt sind oder nicht verschlüsselt sind. Im Falle einer Verschlüsselung des Nutzdatums i oder der jeweils zusammengehörenden Nutzdaten i werden diese anhand der im Verschlüsselungsstatus i des Datencontainers hinterlegten Verschlüsselungsverfahrens entschlüsselt.

Sind weitere Nutzdaten i+1 im empfangenen Datencontainer vorhanden, so wird in Verfahrensschritt S40 das nächste Nutzdatum i+1 bzw. die nächsten jeweils zusammengehörenden Nutzdaten i+1 des empfangenen Datencontainers ausgewählt und die jeweils dazugehörigen kennzeichnenden Daten des Kennzeichnungsdatenbereiches 1 daraufhin analog in den Verfahrensschritten S20 und S30 ausgewertet.

Sind alle auf dem Datencontainer abgelegten Nutzdaten i hinsichtlich der Möglichkeit einer Übertragung auf das Gerät bzw. System j überprüft worden, so wird der Datencontainer im Verfahrensschritt S80 einem weiteren Geräte bzw. System j+1 bezüglich einer Übertragung des jeweiligen Nutzdatums i bzw. der jeweils zusammengehörenden Nutzdaten i zugeführt.

Die Erfindung ist nicht auf die dargestellten Ausführungsformen beschränkt. Neben allgemeinen Datencontainern, wie sie obig beschrieben sind, sind von der Erfindung auch spezifische, nach einem bestimmten Kommunikationsstandard
- beispielsweise TCP/IP - aufgebaute Übertragungsprotokolle bzw. Kommunikationsdatenstrukturen abgedeckt.

## Patentansprüche

1. Datencontainer zur Übertragung von Nutzdaten (i) mittels eines Telekommunikationssystems oder Datenträgers an mindestens ein Gerät oder System (j) mit einem Kennzeichnungsdatenbereich (1,1') und einem Nutzdatenbereich (2,2'),
**dadurch gekennzeichnet,**
**daß** die im Nutzdatenbereich (2,2') enthaltenen Nutzdaten (i) jeweils entweder mindestens einem oder keinem der Geräte bzw. Systeme (j) zuordenbar sind.

2. Datencontainer nach Anspruch 1,
**dadurch gekennzeichnet,**
**daß** für jedes im Nutzdatenbereich (2,2') enthaltenes Nutzdatum (i) im Kennzeichnungsdatenbereich (1,1') jeweils ein Zuordnungsstatus (i) enthalten ist, aus dem hervorgeht, ob das jeweilige Nutzdatum (i) einem oder mehreren der Geräte bzw. Systeme (j) zuordenbar ist oder nicht zuordenbar ist.

3. Datencontainer nach Anspruch 2,
**dadurch gekennzeichnet,**
**daß** im Kennzeichnungsdatenbereich (1,1') für jedes Nutzdatum (i) des Nutzdatenbereichs (2,2') weiterhin ein Zuordnungsdatum (i) vorgesehen ist, das für den Fall einer Zuordnung des Nutzdatums (i) zu einem oder mehreren der Geräte bzw. Systeme (j) die Kennzeichnung des/der jeweils zugeordneten Gerät (e) bzw. System(e) (j) beinhaltet.

4. Datencontainer nach einem der Ansprüche 1 bis 3,
**dadurch gekennzeichnet,**
**daß** im Fall keiner Zuordnung eines im Nutzdatenbereich (2,2') enthaltenen Nutzdatums (i) zu einem der Geräte bzw. Systeme (j) das Nutzdatum (i) zu jedem beliebigen Gerät bzw. System (j) übertragbar ist.

5. Datencontainer nach einem der Ansprüche 1 bis 4,
**dadurch gekennzeichnet,**
**daß** im Kennzeichnungsdatenbereich (1,1') weiterhin für jedes im Nutzdatenbereich (2,2') enthaltene Nutzdatum (i) jeweils ein Verschlüsselungsstatus (i) enthalten ist, aus dem hervorgeht, ob das jeweilige Nutzdatum (i) verschlüsselt oder unverschlüsselt ist.

6. Datencontainer nach Anspruch 5,
**dadurch gekennzeichnet,**
**daß** der im Kennzeichnungsdatenbereich (1,1') enthaltene Verschlüsselungsstatus (i) im Fall eines verschlüsselten Nutzdatum (i) weiterhin angibt, ob jeweils eine symmetrische oder eine asymmetrische Verschlüsselung benutzt wird.

7. Datencontainer nach einem der Ansprüche 1 bis 6,
**dadurch gekennzeichnet,**
**daß** der Datencontainer weiterhin eine Signatur enthält, mit der die Authentizität des Datencontainers überprüfbar ist.

8. Datencontainer nach einem der Ansprüche 1 bis 7,
**dadurch gekennzeichnet,**
**daß** die im Nutzdatenbereich enthaltenen Nutzdaten (i) Parameter und/oder Schlüssel zum Entschlüsseln von Daten sind.

9. Verfahren zur Anwendung eines Datencontainers zur Übertragung von Nutzdaten (i) über ein Telekommunikationssystem und einen Datenträger an mindestens ein Gerät oder System (j) mit einem Kennzeichnungsdatenbereich (1,1') und einem Nutzdatenbereich (2,2'),
**dadurch gekennzeichnet,**
**daß** die im Nutzdatenbereich (2,2') enthaltenen Nutzdaten (i) jeweils entweder mindestens einem oder keinem der Geräte bzw. Systeme (j) zuordenbar sind.

10. Verfahren zur Anwendung eines Datencontainers nach Anspruch 9,
**dadurch gekennzeichnet,**
**daß** durch Auswertung eines im Kennzeichnungsdatenbereich (1,1') für jedes im Nutzdatenbereich (2,2') enthaltene Nutzdatum (i) jeweils vorhandenen Zuordnungsstatus (i) ermittelt wird, ob das Nutzdatum (i) entweder mindestens einem oder keinem Gerät bzw. System (j) zuordenbar ist.

11. Verfahren zur Anwendung eines Datencontainers nach Anspruch 10,
**dadurch gekennzeichnet,**
**daß** durch Überprüfung eines im Kennzeichnungsdatenbereich (1,1') für jedes im Nutzdatenbereich (2,2') enthaltene Nutzdatum (i) jeweils vorhandenen Zuordnungsdatums (i) im Fall eines mindestens einem Gerät bzw. System (j) zuordenbaren Nutzdatums (i) festgestellt wird, ob das Nutzdatum (i) einem bestimmten Gerät (j) bzw. einem bestimmten System (j) zuordenbar ist oder nicht zuordenbar ist.

12. Verfahren zur Anwendung eines Datencontainers nach Anspruch 11,
**dadurch gekennzeichnet,**
**daß** ein einem bestimmten Gerät bzw. System (j) zuordenbares Nutzdatum (i) in einen geschützten Speicherbereich des Geräts bzw. Systems (j) abgelegt wird.

13. Verfahren zur Anwendung eines Datencontainers nach Anspruch 12,
**dadurch gekennzeichnet,**
**daß** ein in den geschützten Speicherbereich des Geräts bzw. Systems (j) eingelesenes Nutzdatum (i), falls es entsprechend seines ersten Verschlüsselungsstatus (i) verschlüsselt ist, mit dem in seinem zweiten Verschlüsselungsstatus (i) hinterlegten Verschlüsselungsverfahren entschlüsselt wird.

14. Verfahren zur Anwendung eines Datencontainers nach Anspruch 10,
**dadurch gekennzeichnet,**
**daß** ein Nutzdatum (i), falls es keinem der Geräte bzw. Systeme (j) zuordenbar ist, jedem beliebigen Gerät bzw. System (j) zugeordnet werden darf.

15. Telekommunikationssystem oder Datenträger, welches Nutzdaten mit einem Datencontainer nach einem der Ansprüche 1 bis 8 überträgt und/oder welches ein Verfahren nach einem der Ansprüche 9 bis 14 anwendet.

16. Digitales Speichermedium mit elektronisch auslesbaren Steuersignalen, die so mit einem programmierbaren Computer oder digitalen Signalprozessor eines Telekommunikationsgerätes zusammenwirken können, daß das Verfahren nach einem der Ansprüche 9 bis 14 ausgeführt wird.

17. Computerprogramm-Produkt mit auf einem maschinenlesbaren Träger gespeicherten Programmcode-Mitteln, um alle Schritte gemäß einem der Ansprüche 9 bis 14 durchführen zu können, wenn das Programm auf einem Computer oder einem digitalen Signalprozessor eines Telekommunikationsgerätes ausgeführt wird.

18. Computerprogramm mit Programmcode-Mitteln, um alle Schritte gemäß einem der Ansprüche 9 bis 14 durchführen zu können, wenn das Programm auf einem Computer oder einem digitalen Signalprozessor eines Telekommunikationsgerätes ausgeführt wird.

19. Computerprogramm mit Programmcode-Mitteln, um alle Schritte gemäß einem der Ansprüche 9 bis 14 durchführen zu können, wenn das Programm auf einem maschinenlesbaren Datenträger gespeichert ist.
